# EUROPEAN PATENT SPECIFICATION

(11) **EP 4 302 560 B1**
(45) Date of publication and mention of the grant of the patent: **09.09.2026**
(21) Application number: 22711351.1
(22) Date of filing: 03.03.2022
(51) Int. Cl.: H04W 74/08

(54) **COORDINATION OF PERIODIC AND APERIODIC SENSING FOR AUTONOMOUS TRANSMISSION**
KOORDINATION VON PERIODISCHER UND APERIODISCHER ERFASSUNG FÜR AUTONOME ÜBERTRAGUNG
COORDINATION DE DÉTECTION PÉRIODIQUE ET APÉRIODIQUE POUR TRANSMISSION AUTONOME

(30) Priority: 05.03.2021 US 202163157184 P
(43) Date of publication of application: 10.01.2024
(73) Proprietor: Telefonaktiebolaget LM Ericsson (publ), 164 83 Stockholm (SE)
(72) Inventor: LEON CALVO, Jose Angel, 52064 AACHEN (DE); ASHRAF, Shehzad Ali, 81827 MUNICH (DE); KIM, Jeong Hun, Kanata, Ontario K2T 0G1 (CA)
(74) Representative: Ericsson
(86) International application number: PCT/SE2022/050210
(87) International publication number: WO 2022/186759

(56) References cited:
- FUJITSU: "Considerations on Partial Sensing and DRX in NR V2X", vol. RAN WG1, no. e-Meeting; 20210125 - 20210205, 22 January 2021 (2021-01-22), XP051975890, Retrieved from the Internet <URL:https://ftp.3gpp.org/tsg_ran/WG1_RL1/TSGR1_104-e/Docs/R1-2101788.zip R1-2101788 Considerations on partial sensing and DRX in NR V2X.docx> [retrieved on 20210122]
- MEDIATEK INC: "Resource allocation for sidelink power saving", vol. RAN WG1, no. e-Meeting; 20210125 - 20210205, 19 January 2021 (2021-01-19), XP051971083, Retrieved from the Internet <URL:https://ftp.3gpp.org/tsg_ran/WG1_RL1/TSGR1_104-e/Docs/R1-2100612.zip R1-2100612 Resource allocation for sidelink power saving.docx> [retrieved on 20210119]
- ROBERT BOSCH GMBH: "Sidelink Resource Allocation to Reduce Power Consumption", vol. RAN WG1, no. e-Meeting; 20201026 - 20201113, 24 October 2020 (2020-10-24), XP051946845, Retrieved from the Internet <URL:https://ftp.3gpp.org/tsg_ran/WG1_RL1/TSGR1_103-e/Docs/R1-2009128.zip R1-2009128 Bosch_Sidelink_Power_Saving_final.docx> [retrieved on 20201024]
- FRAUNHOFER IIS ET AL: "NR Sidelink Resource Allocation for UE Power Saving", vol. RAN WG1, no. e-Meeting; 20201026 - 20201113, 22 October 2020 (2020-10-22), XP051941588, Retrieved from the Internet <URL:https://ftp.3gpp.org/tsg_ran/WG1_RL1/TSGR1_103-e/Docs/R1-2008817.zip R1-2008817_NR_SL_RA_UE_pow_sav.docx> [retrieved on 20201022]
- CATT: "Discussion on resource allocation for power saving", vol. RAN WG1, no. e-Meeting; 20201026 - 20201113, 24 October 2020 (2020-10-24), XP051946514, Retrieved from the Internet <URL:https://ftp.3gpp.org/tsg_ran/WG1_RL1/TSGR1_103-e/Docs/R1-2007833.zip R1-2007833 CATT Discussion on resource allocation for power saving-final.docx> [retrieved on 20201024]

## Description

### Technical Field

The present disclosure relates to a cellular communications system and, more particularly, to sensing for autonomous transmissions in a cellular communications system.

### Background

### 3GPP Work on Sidelink

The Third Generation Partnership Project (3GPP) specified support in Long Term Evolution (LTE) for proximity services (ProSe) in Releases 12 and 13, targeting public safety use cases (e.g., first responders) as well as a small subset of commercial use cases (e.g., discovery). The main novelty of ProSe was the introduction of device-to-device (D2D) communications using the sidelink (SL) interface. During Release 14 and Release 15 in 3GPP, major changes were introduced to the LTE SL framework with the aim of supporting Vehicle to Anything (V2X) communications, where V2X collectively denotes communication between a vehicle and any other endpoint (e.g., a vehicle, a pedestrian, etc.). The feature targeted mostly basic V2X use cases such as day-1 safety, etc.

During Release 16, 3GPP worked on specifying the SL interface for Fifth Generation (5G) New Radio (NR). The NR SL in Release 16 mainly targets advanced V2X services, which can be categorized into four use case groups: vehicles platooning, extended sensors, advanced driving, and remote driving. The advanced V2X services require a new SL in order to meet the stringent requirements in terms of latency and reliability. The NR SL is designed to provide higher system capacity and better coverage, and to allow for an easy extension to support the future development of further advanced V2X services and other related services.

Given the V2X services targeted by NR SL, it is commonly recognized that groupcast/multicast and unicast transmissions are desired, in which the intended receiver of a message consists of only a subset of the vehicles in proximity to the transmitter (groupcast) or of a single vehicle (unicast). For example, in the platooning service, there are certain messages that are only of interest to the members of the platoon, making the members of the platoon a natural groupcast. In another example, the see-through use case most likely involves only a pair of vehicles, for which unicast transmissions naturally fit. Therefore, NR SL not only supports broadcast as in LTE SL, but also groupcast and unicast transmissions. Like in LTE SL, the NR SL is designed in such a way that its operation is possible with and without network coverage and with varying degrees of interaction between the User Equipments (UEs) and the network (NW), including support for standalone, network-less operation.

In Release 17, 3GPP is working on multiple enhancements for the SL with the aim of extending the support for V2X and to cover other use cases (UCs) such as public safety (see RP-193231). Among these, improving the performance of power limited UEs (e.g., pedestrian UEs, first responder UEs, etc.) and improving the performance using resource coordination are considered critical.

### Resource Allocation for Sidelink Transmissions

Like in LTE SL, there are two resource allocation modes for NR SL:
- Network-based resource allocation, in which the network selects the resources and other transmit parameters used by SL UEs. In some cases, the network may control every single transmission parameter. In other cases, the network may select the resources used for transmission but may give the transmitter the freedom to select some of the transmission parameters, possibly with some restrictions. In the context of NR SL, 3GPP refers to this resource allocation mode as Mode 1.
- Autonomous resource allocation, in which the UEs autonomously select the resources and other transmit parameters. In this mode, there may be no intervention by the network (e.g., out of coverage, unlicensed carriers without a network deployment, etc.) or very minimal intervention by the network (e.g., configuration of pools of resources, etc.). In the context of NR SL, 3GPP refers to this resource allocation mode as Mode 2.

The present disclosure is mostly related with operations and methods using resource allocation Mode 2 or any other mode in which the UE(s) perform sensing and resource allocation.

### Mode 2 in NR SL

In SL Mode 2, distributed resource selection is employed, i.e., there is no central node for scheduling, and UEs play the same role in autonomous resource selection. SL Mode 2 is based on two functionalities: reservation of future resources and sensing-based resource allocation. Reservation of future resources is done so that the UE sending a message also notifies the receivers about its intention to transmit using certain time-frequency resources at a later point in time. For example, a UE transmitting at time T informs the receivers that it will transmit using the same frequency resources at time T+100 ms. Resource reservation allows a UE to predict the utilization of the radio resources in the future. That is, by listening to the current transmissions of another UE, it also obtains information about potential future transmissions. This information can be used by the UE to avoid collisions when selecting its own resources. Specifically, a UE predicts the future utilization of the radio resources by reading received booking messages and then schedules its current transmission to avoid using the same resources. This is known as sensing-based resource selection.

The sensing-based resource selection scheme specified in NR Release 16 can be roughly summarized in the following steps and is defined in the 3GPP Technical Specification (TS) 38.214 (v16.1.0).
a) A UE senses the transmission medium during an interval [n-a, n-b], where n is a time reference, and a > b ≥ 0 define the window size (i.e., time duration in this context) of the sensing window. The window size of the sensing window is (pre-)configurable.
b) Based on the sensing results, the UE predicts the future utilization of the transmission medium at a future time interval [n+T1, n+T2], where T2 > T1 ≥ 0. The interval [n+T1, n+T2] is the resource selection window.
c) The UE selects one or more time-frequency resources among the resources in the selection window [n+T1, n+T2] that are predicted or determined to be selectable (e.g., idle, usable, available, etc.).

The excerpt below includes the text of 3GPP TS 38.214 (v16.1.0) that is related to sensing and selection windows in NR SL Mode 2. More specifically,
- The sensing window is explicitly defined in Step 2 in the excerpt.
- The resource selection window corresponds to the time interval [*n* + *T*₁, *n* + *T*₂], as described in Step 1 in the excerpt.

### ********** START EXCERPT FROM 3GPP TS 38.214 **********

### 8.1.4 UE procedure for determining the subset of resources to be reported to higher layers in PSSCH resource selection in sidelink resource allocation mode 2

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:
- the resource pool from which the resources are to be reported;
- L1 priority, *prio_{TX}*;
- the remaining packet delay budget;
- the number of sub-channels to be used for the PSSCH/PSCCH transmission in a slot, *L*_{subCH};
- optionally, the resource reservation interval, *P*_{rsvp_TX}, in units of ms.
- if the higher layer requests the UE to determine a subset of resources from which the higher layer will select resources for PSSCH/PSCCH transmission as part of re-evaluation or pre-emption procedure, the higher layer provides a set of resources (*r*₀*, r*₁, *r*₂, ...) which may be subject to re-evaluation and a set of resources $\left({r}_{0}^{′}, {r}_{1}^{′}, {r}_{2}^{′},…\right)$ which may be subject to pre-emption.
   - it is up to UE implementation to determine the subset of resources as requested by higher layers before or after the slot ${r}_{i}^{"} - {T}_{3}$, where ${r}_{i}^{"}$ is the slot with the smallest slot index among (*r*₀*, r*₁, *r*₂*,* ...) and $\left({r}_{0}^{′}, {r}_{1}^{′}, {r}_{2}^{′},…\right)$, and *T*₃ is equal to ${T}_{proc , 1}^{SL}$, where ${T}_{proc , 1}^{SL}$ is defined in slots in Table 8.1.4-2 where *µ_{SL}* is the SCS configuration of the SL BWP.

The following higher layer parameters affect this procedure:
- *t2min_SelectionWindow:* internal parameter *T*_{2*min*} is set to the corresponding value from higher layer parameter *t2min_SelectionWindow* for the given value of *prio_{TX}.*
- *SL-ThresRSRP_pi_pj*: this higher layer parameter provides an RSRP threshold for each combination (*pᵢ*, *pⱼ*), where *pᵢ* is the value of the priority field in a received SCI format 1-A and *p*ⱼ is the priority of the transmission of the UE selecting resources; for a given invocation of this procedure, *p*ⱼ *= prio_{TX}.*
- *RSforSensing* selects if the UE uses the PSSCH-RSRP or PSCCH-RSRP measurement, as defined in clause 8.4.2.1.
- *sl-ResourceReservePeriodList*
- *t0_SensingWindow:* internal parameter *T*₀ is defined as the number of slots corresponding to *t0_Sensing Window* ms.
- *sl-xPercentage*: internal parameter *X* for a given *prio_{TX}* is defined as *sl-xPercentage(prio_{TX})* converted from percentage to ratio
- *p_preemption:* internal parameter *prioₚᵣₑ* is set to the higher layer provided parameter *p_preemption*

The resource reservation interval, *P*_{rsvp_TX}, if provided, is converted from units of ms to units of logical slots, resulting in ${P}_{rsvp_TX}^{′}$ according to clause 8.1.7.

### Notation:

$\left({t}_{0}^{SL},{t}_{1}^{SL},{t}_{2}^{SL},…\right)$ denotes the set of slots which can belong to a sidelink resource pool and is defined in Clause 8.

The following steps are used:
1) A candidate single-slot resource for transmission *R*_{x,y} is defined as a set of *L*_{subCH} contiguous sub-channels with sub-channel *x*+*j* in slot ${t}_{y}^{SL}$ where *j* = 0,..., *L*_{subCH} - 1. The UE shall assume that any set of *L*_{subCH} contiguous sub-channels included in the corresponding resource pool within the time interval [*n* + *T*₁, *n* + *T*₂] correspond to one candidate single-slot resource, where
   - selection of *T*₁ is up to UE implementation under $0 \leq {T}_{1} \leq {T}_{proc , 1}^{SL}$, where ${T}_{proc , 1}^{SL}$ is defined in slots in Table 8.1.4-2 where *µ_{SL}* is the SCS configuration of the SL BWP;
   - if *T*_{2*min*} is shorter than the remaining packet delay budget (in slots) then *T*₂ is up to UE implementation subject to *T*_{2*min*} ≤ *T*₂ ≤ remaining packet budget (in slots); otherwise *T*₂ is set to the remaining packet delay budget (in slots).
   The total number of candidate single-slot resources is denoted by *M*ₜₒₜₐₗ.
2) The sensing window is defined by the range of slots $\left[n-{T}_{0},n-{T}_{proc , 0}^{SL}\right)$ where *T*₀ is defined above and ${T}_{proc , 0}^{SL}$ is defined in slots in Table 8.1.4-1 where *µ_{SL}* is the SCS configuration of the SL BWP. The UE shall monitor slots which can belong to a sidelink resource pool within the sensing window except for those in which its own transmissions occur. The UE shall perform the behaviour in the following steps based on PSCCH decoded and RSRP measured in these slots.
3) The internal parameter *Th*(*pᵢ*) is set to the corresponding value from higher layer parameter *SL-ThresRSRP_pi_pj* for *pⱼ* equal to the given value of *prio_{TX}* and each priority value *pᵢ*.
4) The set *S_{A}* is initialized to the set of all the candidate single-slot resources.
5) The UE shall exclude any candidate single-slot resource *R*_{x,y} from the set *S_{A}* if it meets all the following conditions:
   - the UE has not monitored slot ${t}_{m}^{SL}$ in Step 2.
   - for any periodicity value allowed by the higher layer parameter *sl-ResourceReservePeriodList* and a hypothetical SCI format 1-A received in slot ${t}_{m}^{SL}$ with "Resource reservation period" field set to that periodicity value and indicating all subchannels of the resource pool in this slot, condition c in step 6 would be met.
6) The UE shall exclude any candidate single-slot resource *R*_{x,y} from the set *S_{A}* if it meets all the following conditions:
   a) the UE receives an SCI format 1-A in slot ${t}_{m}^{SL}$, and "Resource reservation period" field, if present, and "Priority" field in the received SCI format 1-A indicate the values *P*_{rsvp_RX} and *prio_{RX},* respectively according to Clause 16.4 in [6, TS 38.213];
   b) the RSRP measurement performed, according to clause 8.4.2.1 for the received SCI format 1-A, is higher than *Th*(*prio_{RX}*);
   c) the SCI format received in slot ${t}_{m}^{SL}$ or the same SCI format which, if and only if the "Resource reservation period" field is present in the received SCI format 1-A, is assumed to be received in slot(s) ${t}_{m + q \times {P}_{rsvp _ RX}^{′}}^{SL}$ determines according to clause 8.1.5 the set of resource blocks and slots which overlaps with ${R}_{x , y + j \times {P}_{rsvp _ TX}^{′}}$ for *q*=1, 2, *..., Q* and *j*=0, 1, *..., Cᵣₑₛₑₗ* - 1. Here, ${P}_{rsvp _ RX}^{′}$ is *P*_{rsvp_RX} converted to units of logical slots according to clause 8.1.7, $Q = \left⌈\frac{{T}_{scal}}{{P}_{rsvp _ RX}}\right⌉$ if *P*_{*rsvp*_}*_{RX} < T_{scal}* and $n ′ - m \leq {P}_{rsvp _ RX}^{′}$, where ${t}_{n ′}^{SL} = n$ if slot n belongs to the set $\left({t}_{0}^{SL},{t}_{1}^{SL},…,{t}_{{T}_{max}}^{SL}\right)$*,* otherwise slot ${t}_{n ′}^{SL}$ is the first slot after slot n belonging to the set $\left({t}_{0}^{SL},{t}_{1}^{SL},…,{t}_{{T}_{max}}^{SL}\right)$; otherwise *Q* = 1. *T_{scal}* is set to selection window size *T₂* converted to units of *ms.*
7) If the number of candidate single-slot resources remaining in the set *S_{A}* is smaller than *X* · *M*ₜₒₜₐₗ, then *Th*(*pᵢ*) is increased by 3 dB for each priority value *Th*(*pᵢ*) and the procedure continues with step 4.

The UE shall report set *S_{A}* to higher layers.

### ********** END EXCERPT FROM 3GPP TS 38.214 **********

### Partial Sensing Mechanism in LTE

For LTE SL, two procedures for resource selection in transmission mode 4 with reduced power consumption were introduced in Release 15: partial sensing and random selection for pedestrian UEs. Note that, in transmission mode 4 for the LTE SL, a transmitting node can autonomously select a resource from a configured or preconfigured resource pool for a SL transmission. In case of partial sensing, the pedestrian UE uses a reduced selection window which is a subset of the selection window used by performing normal sensing. Using this mechanism, only a sub-set of subframes is monitored, or sensed, during the sensing window, i.e., 1 second in LTE, which leads to a power consumption reduction due to the shorter time duration of the sensing mechanism. In this way, partial sensing allows for reducing power consumption at the expense of an increase in resource collision probability. The increase in resource collision probability is due to the fact that the UE is not able to collect the complete channel occupancy information due to the reduced sensing time.

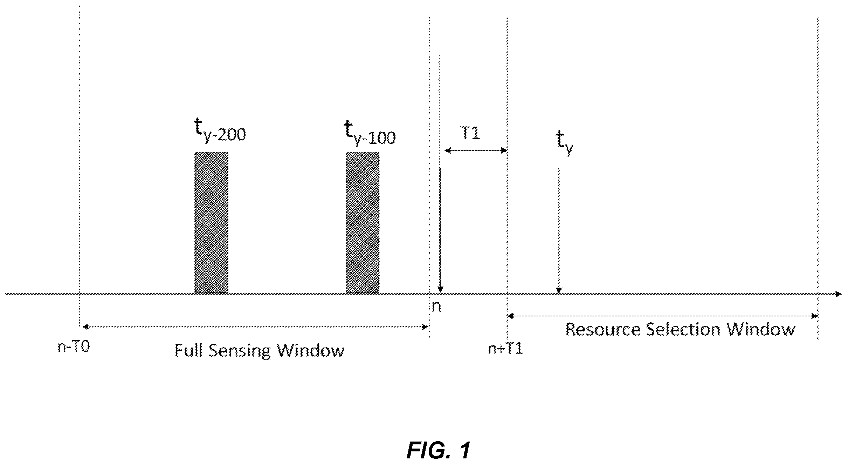

When partial sensing is (pre-)configured for a resource pool, a UE can perform reduced sensing, i.e. at limited sensing occasions, within the full sensing window which as mentioned before is 1 second in LTE. An example of the operation in LTE for partial sensing is shown in Figure 1, where the sensing occasions are determined considering the periodic nature of the traffic, i.e., the sensing is performed periodically repeating with a step of 100 milliseconds (ms) as determined by t_{y-200} and t_{y-100}. These instants in time to perform the partial sensing operation are defined from the instant t_{y}, which is the subframe selected by the UE and it is up to UE implementation as long as it is within the resource selection window.

For each transmission pool, the resource selection mechanism (i.e., random selection, partial sensing-based selection or either random selection or partial sensing-based selection) that is allowed to be used in this pool is also configured. If the UE is configured to use either random selection or partial sensing-based selection for one transmission pool, it is up to UE implementation to select a specific resource selection mechanism. If the UE is configured to use partial sensing-based selection only, the UE shall use partial sensing-based selection in the pool. The UE shall not do random selection in the pool wherein only partial sensing is allowed. If the eNB does not provide a random selection pool, the UEs that support only random selection cannot perform sidelink transmission. In exceptional pool, the UE uses random selection. The UE can send Sidelink UE Information message to indicate that it requests resource pools for P2X-related V2X sidelink communication transmission as specified in 3GPP TS 36.331.

### Related art

The 3GPP document R1-2101788 entitled "Considerations on Partial Sensing and DRX in NR V2X" discloses views on resource allocation from a partial sensing perspective.

The 3GPP document R1-2100612 entitled "Resource allocation for sidelink power sharing" discloses sidelink power saving techniques, partial sensing and random resource selection design.

The 3GPP document R1-2009128 entitled "Sidelink Resource Allocation to Reduce Power Consumption" discloses high-level discussions and motivation for resource allocation enhancement considering power saving for sidelink.

### Summary

The invention is set out in the appended set of claims.

### Brief Description of the Drawings

The accompanying drawing figures incorporated in and forming a part of this specification illustrate several aspects of the disclosure, and together with the description serve to explain the principles of the disclosure.
Figure 1 illustrates the operation of a User Equipment (UE) for partial sensing in Long Term Evolution (LTE);
Figure 2 illustrates both periodic and aperiodic sensing schemes;
Figure 3 illustrates one example of a cellular communications system in which embodiments of the present disclosure may be implemented;
Figure 4 illustrates aperiodic sensing window modification based on the periodic sensing occasions in accordance with one example embodiment of the present disclosure;
Figure 5 illustrates the operation of a network node (e.g., a base station or a network node that implements at least some of the functionality of the base station) and a sideline (SL) wireless communication device (WCD) in accordance with at least some embodiments of the present disclosure;
Figure 6 is a schematic block diagram of a network node according to some embodiments of the present disclosure;
Figure 7 is a schematic block diagram that illustrates a virtualized embodiment of the network node of Figure 6 according to some embodiments of the present disclosure;
Figure 8 is a schematic block diagram of the network node of Figure 6 according to some other embodiments of the present disclosure;
Figure 9 is a schematic block diagram of a WCD according to some embodiments of the present disclosure; and
Figure 10 is a schematic block diagram of the WCD of Figure 9 according to some other embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure as defined by the claims.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s) with respect to autonomous sidelink (SL) communication (i.e., SL Mode 2 in NR). In NR Release 16, the SL UEs are sensing all the time, i.e., always-on operation, without any off-sensing period. This mode of operation is not compatible with power saving modes operations, and, therefore, a procedure to perform discontinuous sensing is needed. Similar to LTE Release 14, a periodic partial sensing is being introduced in NR Release 17 in order to reduce the power consumption of the SL UEs. The periodicity of the sensing occasions will be (pre-)configured. However, using only this periodic sensing operation is not enough in case of having aperiodic traffic, which needs a more flexible solution. Therefore, it has been discussed to have a combination of periodic partial sensing (similar to LTE Release 14) and aperiodic contiguous sensing window (new in NR Release 17) for SL UEs.

However, if both periodic and aperiodic sensing is (pre-)configured for a UE and there is no coordination between the sensing occasions (or windows) for periodic and aperiodic sensing, the power consumption of the UE will increase unnecessarily, and the UE may also experience unnecessary transmission delays due to the mandatory sensing mechanism. Also, the reception performance of high priority traffic may also be sacrificed due to the overlapping of sensing and resource allocation windows. Therefore, coordination between both modes of sensing operation is needed in order to maximize the resource monitoring while minimizing as much as possible the power consumption of the SL UEs.

Certain aspects of the present disclosure and their embodiments may provide solutions to the aforementioned or other challenges. Systems and methods are disclosed herein for coordinating and adapting aperiodic sensing occasions (or windows) based on a (e.g., previous) periodic sensing occasion(s) (or window(s)) and/or coordinating and adapting periodic sensing occasions (or windows) based on (e.g., previous) aperiodic sensing occasions (or windows). In some embodiments, the aim is to gather as much information as possible from the monitoring occasions while keeping the power consumption to the minimum by avoiding unnecessary sensing. Furthermore, systems and methods are disclosed herein for mitigating or avoiding the performance degradation (e.g., in transmission delay or reception) due to overlapping between a resource selection window for aperiodic traffic and a periodic sensing occasion(s). This is particularly beneficial when the UE is half-duplex (i.e., the UE can either transmit or receive at any point in time, but cannot or does not simultaneously transmit and receive).

In one embodiment, a procedure to adapt and modify an aperiodic sensing window based on a periodic sensing window(s) and/or to adapt and modify a periodic sensing window based on an aperiodic sensing window is provided. In one embodiment, the procedure defines a maximum sensing value, which is established based on a combination of the sensing windows for both periodic and aperiodic sensing. The maximum sensing value is used as a constraint to turn-off or reduce a window size of any of the sensing windows.

In one embodiment, an aperiodic sensing window is modified to coordinate the sensing windows and avoid unnecessary sensing without impacting in the capacity of detecting collisions by sensing. Moreover, based on certain parameters, e.g., priority, latency, or whether an initial transmission or re-transmission, the weight/relevance used for a maximum sensing value of the periodic or aperiodic sensing window may be modified.

Certain embodiments may provide one or more of the following technical advantage(s):
- Reduce the power consumption of the UE during sensing operation due to the coordination between periodic and aperiodic sensing occasions (or windows). If there is no coordination between periodic and aperiodic sensing occasions, then the power consumption of the UE may increase because a UE transmitting aperiodic packet may not consider the channel occupancy information from periodic sensing occasion.
- Optimize the performance of sensing mechanism and keeping the power consumption to the minimum.
- Reduce the transmission latency of aperiodic traffic/packet. This is because without coordination, the latency of aperiodic traffic/packet may increase because a UE will perform the mandated sensing even if it already has gathered enough channel occupancy information from periodic sensing occasions.
- Increase the reception performance of high priority traffic by avoiding half duplex situations.

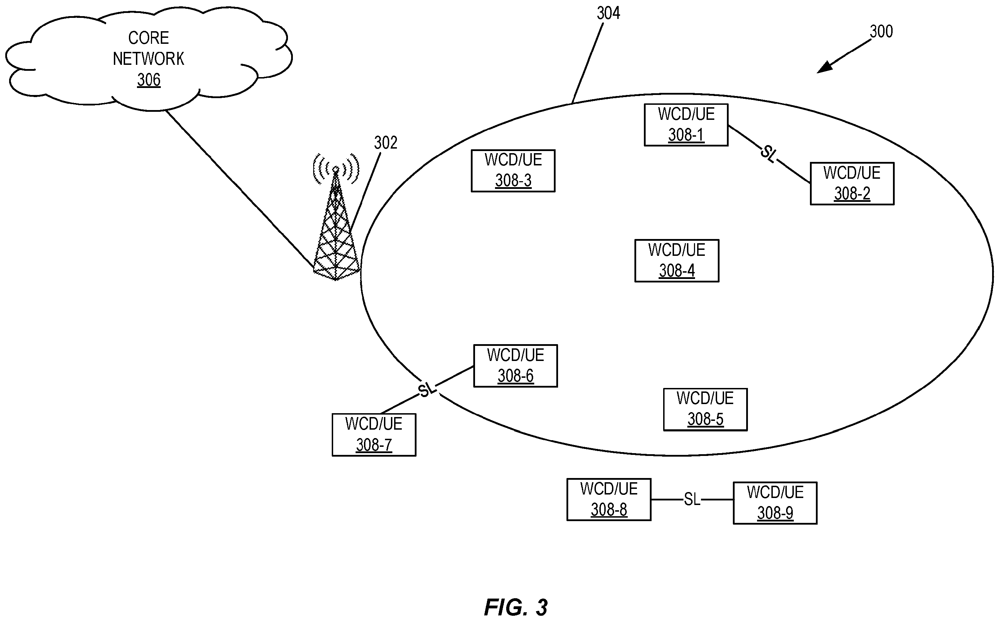

Figure 3 illustrates one example of a cellular communications system 300 in which embodiments of the present disclosure may be implemented. In the embodiments described herein, the cellular communications system 300 is a 5G system (5GS) including a Next Generation RAN (NG-RAN) and a 5G Core (5GC); however, the present disclosure is not limited thereto. The embodiments described herein may be used in any type of cellular or wireless system in which wireless communication devices (e.g., UEs) perform autonomous sidelink or D2D communication based on a combination of periodic and aperiodic sensing. In this example, the RAN includes a base station 302, which in the 5GS may be a NR base station (gNB) or optionally a next generation eNB (ng-eNB) (e.g., LTE RAN nodes connected to the 5GC), controlling a corresponding cell 304. The cellular communications system 300 also includes a core network 306, which in the 5GS is referred to as the 5GC. The base station 302 is connected to the core network 306.

The base station 302 provides service to wireless communication devices (WCDs) 308-1 through 308-6 in the cell 304. The cellular communications system 300 may also include WCDs, such as WCDs 308-7 through 308-9, that are located outside of the cell 304. The WCDs 308-1 through 308-9 are generally referred to herein collectively as WCDs 308 and individually as a WCD 308. In the following description, the WCDs 308 are oftentimes UEs and as such may also be referred to herein as UEs 308, but the present disclosure is not limited thereto.

In accordance with embodiments of the present disclosure, at least some of the WCDs 308 are capable of sidelink (SL). In the illustrated example, the WCDs 308-1 and 308-2 are located within the cell 304 and also have a SL between them over which they transmit and receive data to one another. In a similar manner, in the illustrated example, the WCD 308-6, which is located within the cell 304, and the WCD 308-7, which is located outside of the cell 304, have a SL between them over which they transmit and receive data to one another. In a similar manner, in the illustrated example, the WCDs 308-8 and 308-9 are both located outside of the cell 304 and also have a SL between them over which they transmit and receive data to one another. Note that, when operating with respect to SL communication, a WCD 308 may sometimes be referred to herein as a "SL WCD 308" or "SL UE 308".

Now, the description will turn to a number of embodiments of the present disclosure. In this description, the focus is on 3GPP technology (NR SL) and terminology; nevertheless, most of the embodiments are, in general, applicable to any kind of D2D communications with respect to sensing operations.

In one example embodiment, the SL WCDs 308 operate in accordance with NR SL Mode 2, where distributed resource selection is employed, i.e., there is no central node for scheduling, and SL WCDs 308 play the same role in autonomous resource selection. As discussed above, SL Mode 2 is based on two functionalities: reservation of future resources and sensing-based resource allocation. Reservation of future resources is done so that the SL WCD 308 sending a message also notifies the receivers about its intention to transmit using certain time-frequency resources at a later point in time. For example, a SL WCD 308 transmitting at time T informs the receivers (i.e., other SL WCDs 308) that it will transmit using the same frequency resources at time T+100 ms. Resource reservation allows a SL WCD 308 to predict the utilization of the radio resources in the future. That is, by listening to the current transmissions of another SL WCD(s) 308, it also obtains information about potential future transmissions. This information can be used by the SL WCD 308 to avoid collisions when selecting its own resources. Specifically, the SL WCD 308 predicts the future utilization of the radio resources by reading received booking messages and then schedules its current transmission to avoid using the same resources. This is known as sensing-based resource selection. Note, however, that NR SL Mode 2 is only one example. Any other autonomous D2D or SL transmission scheme that relies on both periodic and aperiodic sensing of messages from other devices that reserve future resources may be used.

Embodiments are described herein for coordinating and adapting a sensing occasion(s) (or window(s)) of an aperiodic sensing procedure (also referred to herein as "aperiodic sensing occasion(s)" or "aperiodic sensing window(s)"), i.e., sensing triggered due to an upcoming transmission, based on one or more periodic sensing occasions (or windows) (e.g., one or more previous periodic sensing occasions and/or one or more upcoming periodic sensing occasions). Note, however, that a periodic sensing occasion(s) (or window(s)) may alternatively be adapted based on an aperiodic sensing occasion(s) (or window(s)) (e.g., one or more previous aperiodic sensing occasions and/or one or more upcoming aperiodic sensing occasions).

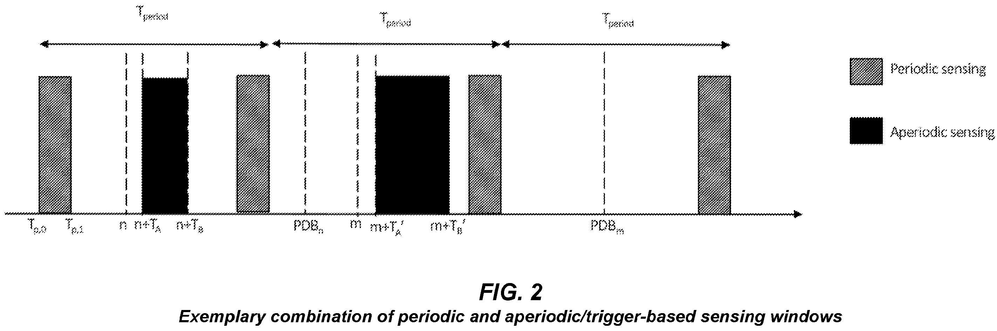

A SL WCD 308 may perform periodic sensing, i.e., sensing every *t* milliseconds (ms) or every *t* slots. In addition to the periodic sensing, the SL WCD 308 may also perform, in parallel, aperiodic sensing initiated based on an indication from higher layers, e.g., an indication from higher layers that a (e.g., aperiodic) transmission is to be sent. Figure 2 illustrates both periodic and aperiodic sensing schemes, i.e. periodic and aperiodic (i.e., trigger-based) sensing. As shown in Figure 2, the periodic sensing occasions are defined by associated parameters (e.g., T_{period} and window size) which may be (pre-)configured. As an example, as shown in Figure 2:
- T_{period} defines the periodicity between the consecutive periodic sensing occasions, and
- T_{p,0} and T_{p,1} define the window size of the periodic sensing window.
On the other hand, the aperiodic sensing window is defined by one or more parameters which determine the window size. As an example, in Figure 2, the parameters T_{A} and T_{B} define the window size of the aperiodic sensing window. Moreover, a parameter packet delay budget (PDB) is used to define the maximum delay allowed to select resource(s) for the transmission. In case of aperiodic sensing, the PDB should be greater than or equal to sum of the sensing window defined by [n+ T_{A}, n+ T_{B}] and the selection window (not depicted in Figure 2).

The SL WCD 308 is able to perform both periodic and aperiodic sensing. However, periodic and aperiodic sensing need to be coordinated in order to optimize power saving. For instance, from a power saving perspective - and also in terms of extra/relevant information gathered from the aperiodic sensing - it may not be efficient to perform the aperiodic sensing at all or it may be more efficient to perform aperiodic sensing with a reduced window size, if the periodic sensing has a small periodicity, e.g., every 1 ms (or slot) or has been performed immediately before the aperiodic sensing is triggered (e.g. when the SL WCD 308 has a packet to transmit). Thus, in one embodiment, the SL UE 308 adapts the window size (e.g., time duration or size, e.g., in time and/or frequency) of the aperiodic sensing window based on the periodicity of the periodic sensing windows and/or the location (in time) of one or more of the periodic sensing windows relative to the aperiodic sensing window. For example, if the periodicity of the periodic sensing windows is small (e.g., less than a predefined or (pre-)configured threshold), the SL WCD 308 reduces the size of the aperiodic sensing window (e.g., selects a first window size that is less than a second window size that is selected if the periodicity of the periodic sensing window is large (e.g., greater than the predefined or (pre-)configured threshold). As another example, if the start of the aperiodic sensing window occurs during or at the end of a preceding periodic sensing window, the SL WCD 308 adapts the aperiodic sensing window by, e.g., aligning the start of the aperiodic sensing window with the end of the preceding periodic sensing window (if not already the case) and reducing the window size of the aperiodic sensing window such that a combined window size of the preceding periodic sensing window and the aperiodic sensing window is less than or equal to a predefined or (pre-)configured maximum window size).

Regarding the sensing information used to perform the resource selection for transmission (of either periodic or aperiodic traffic), the SL WCD 308 uses a combination of sensing information from the periodic sensing occasions (or windows) Mᵢ, e.g., only the most recent sensing occasion(s) or (windows) or a pre-defined number of periodic occasions (or windows), in addition to the aperiodic sensing window (if any).

Moreover, in one embodiment, the window size of the aperiodic sensing window is modified in order to optimize the alignment with the periodic sensing window, which may lead to modifying the aperiodic sensing window to [n + T_{A}', n+T_{B}']. Based on this coordination, when the SL WCD 308 is performing both periodic and aperiodic sensing, the parameters which define the aperiodic sensing window, i.e. T_{A} and T_{B}, may depend on the periodic sensing window or occasions.

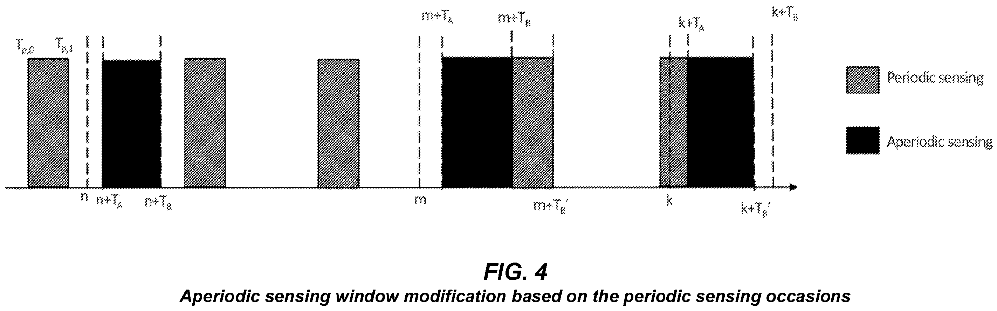

For instance, as depicted in Figure 4, the aperiodic sensing window triggered at time k is normally defined by the parameters T_{A} and T_{B}, but is modified in order to address an overlap of the aperiodic sensing window with the prior periodic sensing window such that the ending point of the aperiodic sensing window is modified to T_{B}' (rather than T_{B}). In this manner, the aperiodic sensing window size is reduced in order to avoid extra sensing which is not needed due to the sensing done in the prior periodic sensing window. Optionally, if the starting point of the aperiodic window (k+T_{A}) occurs prior to the end of the prior periodic sensing window, the starting point of the aperiodic window may be modified to k+T_{A}' such that the start of the aperiodic sensing window is aligned with the end of the prior periodic sensing window.

In another example, the aperiodic sensing window triggered at time m is extended up to m+T_{B}', i.e., the periodic sensing occasion is not performed, to avoid performance degradation due to half duplex which arises because of transmission of aperiodic traffic/packet. While not illustrated, if the ending point n+T_{B} of the aperiodic sensing window triggered at time n occurs less than a defined or (pre-)configured amount of time (or slots) prior to the start of the immediately following periodic sensing window, the aperiodic window may be adapted to: (a) end at time n+T_{B}', where n+T_{B}' may be aligned with the start of the immediately following periodic sensing window, (b) end at time n+T_{B}' where n+T_{B}' is aligned with the end of the immediately following periodic sensing window (in which case the immediately following periodic sensing window would be skipped), or (c) end at time n+T_{B}' where n+T_{B}' occurs after the start of but before the end of the immediately following periodic sensing window (in which case the immediately following periodic sensing window may be skipped or shortened).

In order to reduce the power consumption due to the sensing operation, in one embodiment, a maximum sensing window length Sₜₕ is defined or (pre-)configured and used as a constraint on the combination of the periodic sensing window(s) size M and the aperiodic sensing window size N, i.e. M + N ≤ Sₜₕ where the parameters are defined as follows:
- The periodic sensing window size value M is defined based on only the last periodic sensing occasion (i.e., the immediately preceding periodic sensing occasion) or as a combination of the last X periodic sensing occasions or periodic sensing occasions within the last Y ms, i.e., ${\sum }_{i}^{X} {M}_{i} = M$*,* where X ≥ 1.
- The aperiodic sensing window size value N comprises the sensing triggered by the need of transmission. An initial value of N is, in some embodiments, (pre-)configured or pre-defined.
The maximum sensing window length Sₜₕ may then be used as a constraint when, e.g., adapting the aperiodic sensing window in accordance with any of the embodiments or examples provided herein.

In one embodiment, based on different parameters associated to the upcoming transmission that triggered the aperiodic sensing window, the relevance of the periodic or the aperiodic sensing occasions could be modified as follows:
- In one case, the aperiodic sensing window size value N is modified from the initial (pre-)configured or pre-defined value based on the periodic sensing occasions or window size i.e., M. Please note that the value of N can be modified by either modifying T_{A} or T_{B} as shown in Figure 4.
- In another case, for high priority transmission, the aperiodic sensing window is prioritized such that the number of occasions of the periodic sensing Mᵢ considered for the monitoring of the channel occupation is reduced. In an extreme case, it is possible to get the value of M = 0, and therefore, N ≤ Sₜₕ. Moreover, it could also be the case that, for low priority traffic, the aperiodic sensing window is skipped, i.e., N = 0, and all the sensing information comes from the periodic sensing occasions M ≤ Sₜₕ.
- Another option is for the case where the transmission is not the initial transmission but a re-transmission, e.g., New Data Indicator (NDI) is not toggled. In this case, similar as in the previous option the aperiodic sensing window can be prioritized.
- In another option, the latency of the transmission, i.e., the given PDB for a transmission is considered. For instance, for a low-latency transmission (i.e., smaller PDB or if PDB is below a (pre-)configured threshold) the initial aperiodic sensing can be turned-off, i.e., N = 0 (or severely reduced), and all the sensing information comes from the periodic sensing.

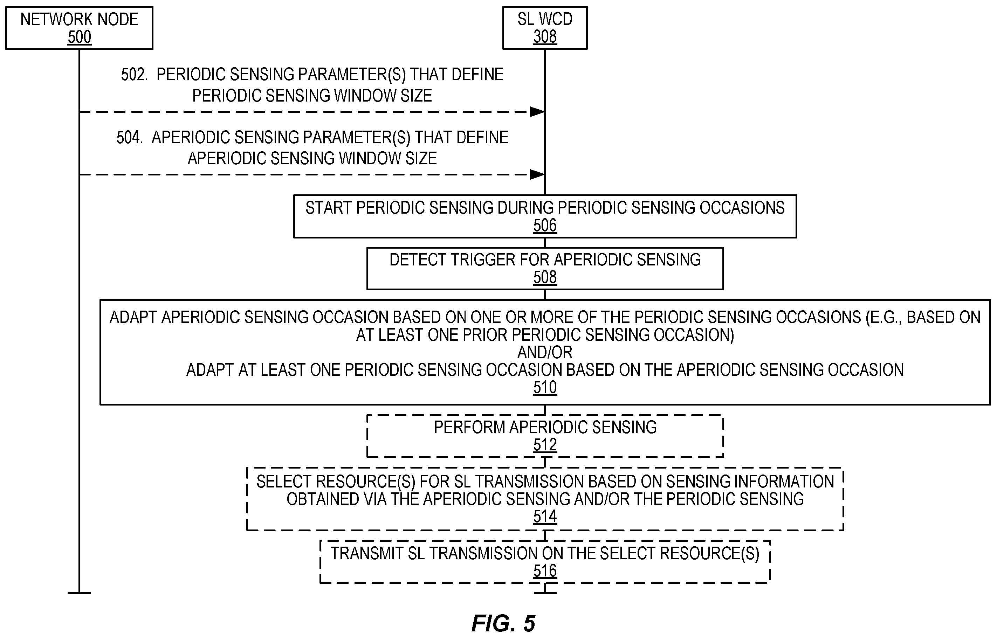

Figure 5 illustrates the operation of a network node 500 (e.g., the base station 302 or a network node that implements at least some of the functionality of the base station 302) and a SL WCD 308 in accordance with at least some embodiments of the present disclosure. Optional steps are represented by dashed lines/boxes. As illustrated, the network node 500 may send, and the SL WCD 308 receive, a configuration of one or more periodic sensing parameters that define, e.g., the periodic sensing window size and/or the periodicity of the periodic sensing occasions (step 502). The network node 500 may send, and the SL WCD 308 receive, a configuration of one or more aperiodic sensing parameters that define, e.g., an initial aperiodic sensing window size (step 504).

The SL WCD 308 performs or is configured to perform periodic sensing and aperiodic sensing in parallel. In this regard, the SL WCD 308 starts periodic sensing in periodic sensing occasions (step 506). After the SL WCD 308 has started performing the periodic sensing (e.g., while the periodic sensing is ongoing, but not necessarily during a periodic sensing occasion), the SL WCD 308 detects a trigger for the aperiodic sensing (step 508). As discussed above, this may be, e.g., that a lower layer (e.g., physical layer) of the protocol stack of the SL WCD 308 receives an indication from a higher layer that there is data to be transmitted via the SL. Another example is a that a lower layer of the protocol stack of the SL WCD 308 receives an indication from a higher layer that resources selected for a transmission based on sensing information collected during a prior aperiodic sensing window need to be re-evaluated or re-selected.

Responsive to detecting the trigger for aperiodic sensing, the SL WCD 308 performs aperiodic sensing. In particular, the SL WCD 308 adapts the aperiodic sensing occasion (or window) based on one or more of the periodic sensing occasions (e.g., based on at least one (e.g., nearest) prior periodic sensing occasion and/or based on at least one (e.g., nearest) subsequent periodic sensing occasion) (step 510). In addition or alternatively, the SL WCD 308 adapts at least one of the periodic sensing occasions (e.g., at least one of the periodic sensing occasions that is nearest to the aperiodic sensing occasion) based on the aperiodic sensing occasion (step 510). Note that the adaptation of the aperiodic sensing window may be performed by modifying an initial aperiodic sensing occasion, where the initial aperiodic sensing occasion is defined based on one or more initial aperiodic sensing parameters (e.g., configured in step 504) such as, e.g., an initial aperiodic sensing window size, an initial starting time of the aperiodic sensing window (time n+T_{A}, where n is a reference time such as a time at which the triggering event was detected in step 508), and/or an initial ending time of the aperiodic sensing window (time n+T_{B}, where n is a reference time such as a time at which the triggering event was detected in step 508). However, the adaptation of the aperiodic sensing occasion may alternatively be performed by selecting one or more parameters for the aperiodic sensing occasion (e.g., aperiodic sensing window size, start time, and/or end time) based on one or more parameters related to at least one of the periodic sensing windows (e.g., periodicity, sensing window size of the preceding periodic sensing window, combined size of two or more preceding periodic sensing windows, etc.). In this manner, one or more characteristics (window size, start time, and/or end time) of the aperiodic sensing occasion will vary depending on the one or more parameters related to the at least one of the periodic sensing windows.

The SL WCD 308 performs sensing during the (adapted) aperiodic sensing occasion (in addition to sensing during the (potentially adapted) periodic sensing occasions) (step 512). The SL WCD 308 selects a resource(s) (e.g., time and/or frequency resources such as, e.g., resource element(s), resource block(s), subcarrier(s), OFDM symbol(s), slot(s), subframe(s)) for a SL transmission (e.g., a SL transmission that triggered the aperiodic sensing) based on sensing information obtained as a result of the sensing of step 512 (step 514). The SL WCD 308 then transmits the SL transmission using the selected resource(s) (step 516).

In regard to step 510, any of the embodiments described herein for adapting the aperiodic sensing occasion and/or the periodic sensing occasion may be used and, as such, the details described herein in relation thereto are equally applicable here to step 510. However, in this regard, some example embodiments of the adaptation in step 510 are as follows. Note that these embodiments may be used separately or combined in any desired manner. In one embodiment, the aperiodic sensing window size is modified based on the periodic sensing window size or periodic sensing occasion(s) within a time interval. This time interval is, e.g., a number of milliseconds or a number of slots. This time interval may be, e.g., defined relative to a time at which the triggering event for aperiodic sensing is detected (e.g., the time interval is a time interval starting Y milliseconds or Y slots prior to the time that the triggering event was detected and ending at the time that the triggering event was detected). For example, if the total combined window size of one or more prior periodic sensing occasions is M and the window size of the aperiodic sensing window is N, then the aperiodic sensing occasion is adapted such that the combined value M+N is upper bounded by a threshold value, e.g., M + N ≤ Sₜₕ.

In one embodiment, the time interval (which is given in milliseconds or number of slots) is either (pre-)configured or pre-defined. In one embodiment, only the last periodic sensing occasion is considered (i.e., only the last periodic sensing occasion prior to the aperiodic sensing occasion is considered), and the value of M is given by size of the last periodic sensing occasion. In another embodiment, the last X periodic sensing occasions are considered, and the value of M is given by the sum of the window sizes of the last X periodic sensing occasions.

In one embodiment, the size of aperiodic sensing window N is modified either by changing the starting value (denoted above as changing an initial starting time T_{A} to a modified starting time T_{A}') or the ending value (denoted above as changing an initial ending time T_{B} to a modified ending time T_{B}') of the aperiodic sensing occasion.

In one embodiment:
- the aperiodic sensing window size N may include the window size of the aperiodic sensing window, or
- the aperiodic sensing window size N may include the window size of the aperiodic sensing window and also include the window size of an additional aperiodic sensing window (if any) for aperiodic sensing performed to re-evaluate/re-select resources selected based on sensing information collected during the (prior) aperiodic sensing window, or
- the aperiodic sensing window may be associated to a prior aperiodic sensing window for the purpose of re-evaluation or re-selecting resources that were previously selected based on sensing information collected during the prior aperiodic sensing window, and the aperiodic sensing window size N may include the window size of the aperiodic sensing window used for re-evaluation or re-selection.
For instance, with respect to the second or third bullet point above, it could be the case that the re-evaluation/re-selection operation is not performed due to the constraint M + N ≤ Sₜₕ.

In one embodiment, based on different parameters associated to the upcoming transmission (e.g., the SL transmission that triggered the aperiodic sensing), the relevance of the periodic or the aperiodic sensing occasions could be modified as follows:
- e.g., based on the priority of the transmission, either the periodic sensing or the aperiodic sensing is prioritized, e.g., for high priority values, the aperiodic sensing window is prioritized and, for low priority transmission values, the periodic sensing window is prioritized.
- e.g., based on whether the transmission is a re-transmission, i.e., NDI is not toggled, the aperiodic sensing window is prioritized.
- e.g., depending on the latency of the transmission, i.e., based on the PDB value, the periodic sensing window is prioritized if the PDB is higher than a pre-defined value and the aperiodic sensing window is prioritize for the case of a PDB smaller than a pre-defined value.

In one embodiment, if the aperiodic sensing occasion overlaps with a periodic sensing occasion completely or if the amount of overlap is greater than a defined or (pre-)configured threshold amount (e.g., ≥ a threshold percentage), which may be defined in terms of slots or ms, (or vice versa), the aperiodic sensing occasion is turned-off or skipped, e.g., T_{A} = T_{B} = 0.

In one embodiment, if the PDB associated to a transmission triggered at time instant n is greater than T_{period}, the SL WCD 308 adapts, or chooses, an aperiodic sensing occasion such that it overlaps with a (preceding or subsequent) periodic sensing occasion. If the associated PDB is small, then the aperiodic sensing and the transmission is performed independently and immediately.

In regard to step 514, in one embodiment, if the priority of periodic traffic is high, the slots which are part of one or more upcoming periodic sensing occasions are excluded from the resource selection window of aperiodic traffic (e.g., in step 514 described below). Meaning, aperiodic traffic is not transmitted on those slots needed for the upcoming periodic sensing occasion(s) and, instead, sensing for periodic occasions is prioritized by the SL WCD 308. In other words, when selecting the resource(s) for the SL transmission that triggered the aperiodic sensing, resources (e.g., time and/or frequency resources such as, e.g., resource element(s), resource block(s), subcarrier(s), OFDM symbol(s), slot(s), subframe(s)) that are within one or more upcoming periodic sensing occasions (e.g., that occur during the resource selection window) either are or are not considered for the resource selection based on the priority of the periodic traffic and/or the priority of the traffic to be transmitted by the SL transmission that triggered the aperiodic sensing. For instance, if the periodic traffic is high priority (e.g., priority above a threshold or priority above that of a transmission that triggered the aperiodic sensing), then the resources that are within the upcoming periodic sensing occasion(s) are not considered for resource selection for the transmission that triggered the aperiodic sensing (such that those resources cannot be selected for the transmission). As another example, if the periodic traffic is low priority (e.g., priority below a threshold or priority below that of a transmission that triggered the aperiodic sensing), then the resources that are within the upcoming periodic sensing occasion(s) are considered for resource selection for the transmission that triggered the aperiodic sensing (such that those resources can be selected for the transmission). As another example, if the traffic for the transmission that triggered the aperiodic sensing is high priority (e.g., priority above a threshold or priority above that of the periodic traffic associated to the periodic sensing occasions), then the resources that are within the upcoming periodic sensing occasion(s) are considered for resource selection for the transmission that triggered the aperiodic sensing (such that those resources are skipped for periodic sensing if selected for the transmission). As another example, if the traffic for the transmission that triggered the aperiodic sensing is low priority (e.g., priority below a threshold or priority below that of the periodic traffic associated to the periodic sensing occasions), then the resources that are within the upcoming periodic sensing occasion(s) are not considered for resource selection for the transmission that triggered the aperiodic sensing (such that those resources cannot be selected for the transmission). It should be noted that this prioritization with respect to resource selection in step 514 may be used independently of the aperiodic sensing occasion adaptation and/or periodic sensing occasion adaptation of step 510. In other words, in one embodiment, step 510 is not performed, and the prioritization described above for step 514 is performed if there is an overlap between the resources considered for resource selection and one or more upcoming periodic sensing occasions.

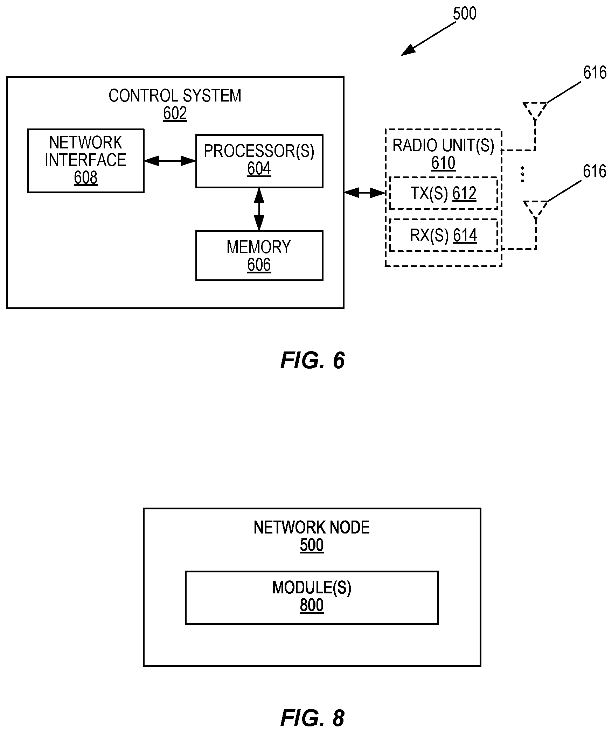

Figure 6 is a schematic block diagram of the network node 500 according to some embodiments of the present disclosure. Optional features are represented by dashed boxes. The network node 500 may be, for example, the base station 302 or a network node that implements all or part of the functionality of the base station 302 described herein. As illustrated, the network node 500 includes a control system 602 that includes one or more processors 604 (e.g., Central Processing Units (CPUs), Application Specific Integrated Circuits (ASICs), Field Programmable Gate Arrays (FPGAs), and/or the like), memory 606, and a network interface 608. The one or more processors 604 are also referred to herein as processing circuitry. In addition, if the network node 500 is a radio access node such as the base station 302, the network node 500 may include one or more radio units 610 that each includes one or more transmitters 612 and one or more receivers 614 coupled to one or more antennas 616. The radio units 610 may be referred to or be part of radio interface circuitry. In some embodiments, the radio unit(s) 610 is external to the control system 602 and connected to the control system 602 via, e.g., a wired connection (e.g., an optical cable). However, in some other embodiments, the radio unit(s) 610 and potentially the antenna(s) 616 are integrated together with the control system 602. The one or more processors 604 operate to provide one or more functions of the network node 500 as described herein. In some embodiments, the function(s) are implemented in software that is stored, e.g., in the memory 606 and executed by the one or more processors 604.

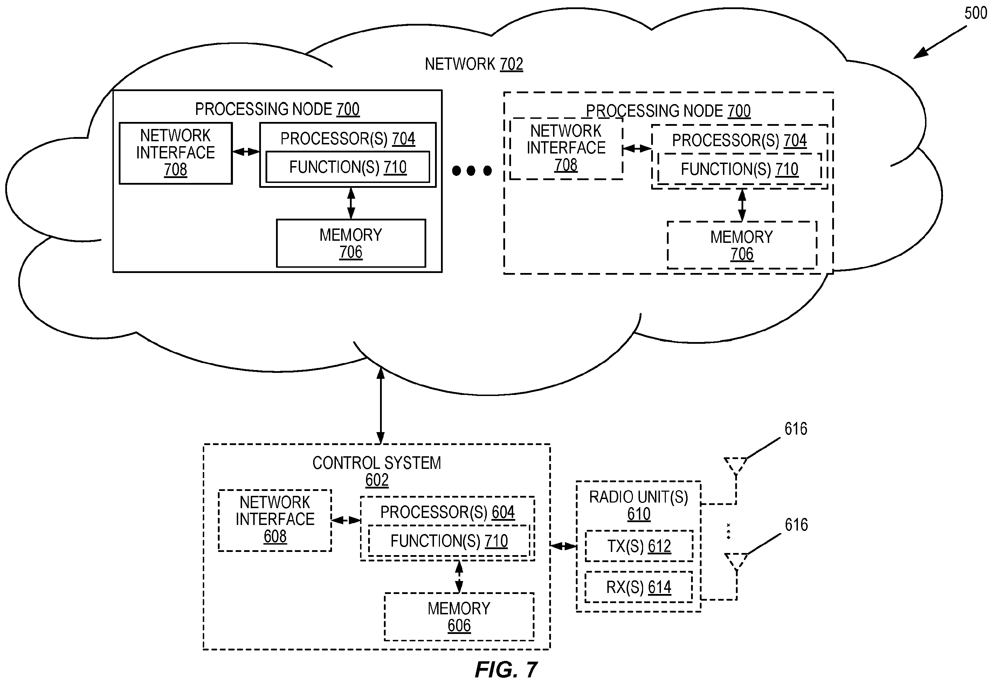

Figure 7 is a schematic block diagram that illustrates a virtualized embodiment of the network node 500 according to some embodiments of the present disclosure. Again, optional features are represented by dashed boxes. As used herein, a "virtualized" network node is an implementation of the network node 500 in which at least a portion of the functionality of the network node 500 is implemented as a virtual component(s) (e.g., via a virtual machine(s) executing on a physical processing node(s) in a network(s)). As illustrated, in this example, the network node 500 may include the control system 602 and/or the one or more radio units 610, as described above. The network node 500 includes one or more processing nodes 700 coupled to or included as part of a network(s) 702. If present, the control system 602 or the radio unit(s) are connected to the processing node(s) 700 via the network 702. Each processing node 700 includes one or more processors 704 (e.g., CPUs, ASICs, FPGAs, and/or the like), memory 706, and a network interface 708.

In this example, functions 710 of the network node 500 described herein are implemented at the one or more processing nodes 700 or distributed across the one or more processing nodes 700 and the control system 602 and/or the radio unit(s) 610 in any desired manner. In some particular embodiments, some or all of the functions 710 of the network node 500 described herein are implemented as virtual components executed by one or more virtual machines implemented in a virtual environment(s) hosted by the processing node(s) 700. As will be appreciated by one of ordinary skill in the art, additional signaling or communication between the processing node(s) 700 and the control system 602 is used in order to carry out at least some of the desired functions 710. Notably, in some embodiments, the control system 602 may not be included, in which case the radio unit(s) 610 communicate directly with the processing node(s) 700 via an appropriate network interface(s).

In some embodiments, a computer program including instructions which, when executed by at least one processor, causes the at least one processor to carry out the functionality of the network node 500 or a node (e.g., a processing node 700) implementing one or more of the functions 710 of the network node 500 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 8 is a schematic block diagram of the network node 500 according to some other embodiments of the present disclosure. The network node 500 includes one or more modules 800, each of which is implemented in software. The module(s) 800 provide the functionality of the network node 500 described herein. This discussion is equally applicable to the processing node 700 of Figure 7 where the modules 800 may be implemented at one of the processing nodes 700 or distributed across multiple processing nodes 700 and/or distributed across the processing node(s) 700 and the control system 602.

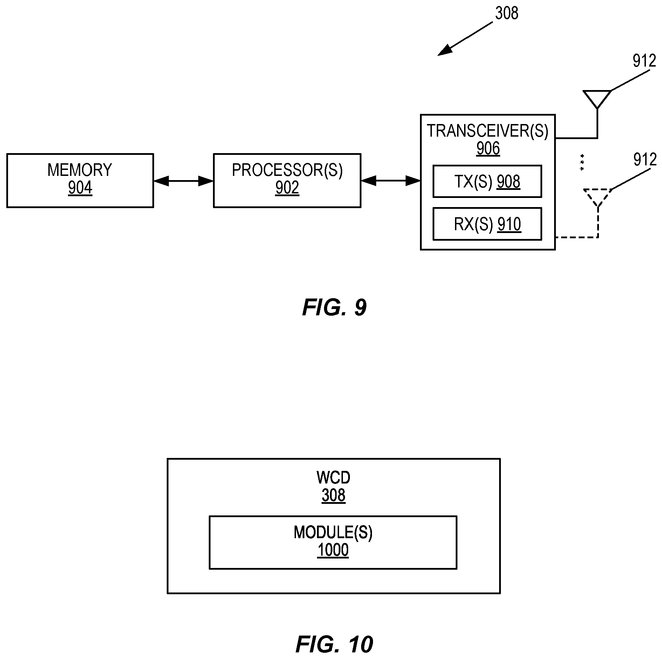

Figure 9 is a schematic block diagram of a WCD 308 according to some embodiments of the present disclosure. As illustrated, the WCD 308 includes one or more processors 902 (e.g., CPUs, ASICs, FPGAs, and/or the like), memory 904, and one or more transceivers 906 each including one or more transmitters 908 and one or more receivers 910 coupled to one or more antennas 912. The transceiver(s) 906 includes radio-front end circuitry connected to the antenna(s) 912 that is configured to condition signals communicated between the antenna(s) 912 and the processor(s) 902, as will be appreciated by on of ordinary skill in the art. The processors 902 are also referred to herein as processing circuitry. The transceivers 906 are also referred to herein as radio circuitry. In some embodiments, the functionality of the WCD 308 (e.g., the SL WCD 308) described above may be fully or partially implemented in software that is, e.g., stored in the memory 904 and executed by the processor(s) 902. Note that the WCD 308 may include additional components not illustrated in Figure 9 such as, e.g., one or more user interface components (e.g., an input/output interface including a display, buttons, a touch screen, a microphone, a speaker(s), and/or the like and/or any other components for allowing input of information into the WCD 308 and/or allowing output of information from the WCD 308), a power supply (e.g., a battery and associated power circuitry), etc.

In some embodiments, a computer program including instructions which, when executed by at least one processor, causes the at least one processor to carry out the functionality of the WCD 308 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the WCD 308 according to some other embodiments of the present disclosure. The WCD 308 includes one or more modules 1000, each of which is implemented in software. The module(s) 1000 provide the functionality of the WCD 308 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Those skilled in the art will recognize improvements and modifications to the embodiments of the present disclosure. All such improvements and modifications are considered within the scope of the claims.

## Claims

1. A method performed by a wireless communication device (308), the method comprising:
• starting (506) periodic sensing, where the periodic sensing comprises sensing during a plurality of periodic sensing occasions; and
• after starting the periodic sensing:
∘ detecting (508) a triggering event for an aperiodic sensing occasion; and
∘ adapting (510) the aperiodic sensing occasion,
the method being **characterized in that** the aperiodic sensing occasion is adapted based on a periodicity of the periodic sensing occasions or based on a window size of one or more of the periodic sensing occasions or based on a starting time of a nearest one of the periodic sensing occasions to the aperiodic sensing occasion or based on an ending time of a nearest one of the periodic sensing occasions to the aperiodic sensing occasion.

2. The method of claim 1 wherein adapting the aperiodic sensing occasion comprises:
(a) adapting a window size of the aperiodic sensing occasion, or
(b) adapting a starting time of the aperiodic sensing occasion, or
(c) adapting an ending time of the aperiodic sensing occasion, or
(d) a combination of any two or more of (a)-(c).

3. The method of claim 1 wherein adapting the aperiodic sensing occasion comprises:
(a) adapting a window size of the aperiodic sensing occasion, or
(b) adapting a starting time of the aperiodic sensing occasion, or
(c) adapting an ending time of the aperiodic sensing occasion, or
(d) a combination of any two or more of (a)-(c),
such that a sum of the window size of the aperiodic sensing occasion and a window size of the one or more of the plurality of periodic sensing occasions is less than a threshold.

4. The method of claim 1 wherein adapting the aperiodic sensing occasion comprises:
(a) adapting a window size of the aperiodic sensing occasion, or
(b) adapting a starting time of the aperiodic sensing occasion, or
(c) adapting an ending time of the aperiodic sensing occasion, or
(d) a combination of any two or more of (a)-(c),
such that a sum of a window size of the aperiodic sensing occasion, a window size of an additional aperiodic sensing occasion that is associated with the aperiodic sensing occasion for re-evaluation or re-selection of resources, and a window size of the one or more of the plurality of periodic sensing occasions is less than a threshold.

5. The method of any of the preceding claims wherein the one or more of the plurality of periodic sensing occasions consist of one or more of the plurality of periodic sensing occasions that occur during a defined or configured time interval prior to the aperiodic sensing occasion.

6. The method of any of the preceding claims further comprising:
performing (512) sensing during the aperiodic sensing occasion;
selecting (514) one or more resources for a sidelink transmission based on sensing information obtained as a result of the sensing during the aperiodic sensing occasion; and
transmitting (516) the sidelink transmission on the one or more selected resources.

7. The method of claim 6 wherein selecting the one or more resources is further based on sensing information obtained as a result of sensing during at least one of the plurality of periodic sensing occasions.

8. The method of claim 6 or 7 wherein selecting the one or more resources comprises selecting the one or more resources from a set of resources that comprises one or more resources that are comprised in one or more upcoming periodic sensing occasions.

9. The method of any of the preceding claims, wherein adapting the aperiodic sensing occasion comprises:
adapting the aperiodic sensing occasion such that an ending time of the aperiodic sensing occasion is aligned with a starting time of a next periodic sensing occasion; or
adapting the aperiodic sensing occasion such that an ending time of the aperiodic sensing occasion is aligned with an ending time of a next periodic sensing occasion; or
adapting the aperiodic sensing occasion to extend an ending time of the aperiodic sensing occasion such that the aperiodic sensing occasion overlaps at least a portion of a next periodic sensing occasion; or
adapting the aperiodic sensing occasion such that a starting time of the aperiodic sensing occasion is aligned with an ending time of a preceding periodic sensing occasion; or
adapting the aperiodic sensing occasion such that a starting time of the aperiodic sensing occasion is aligned with a starting time of a preceding periodic sensing occasion.

10. A wireless communication device (308) adapted to:
• start (506) periodic sensing, where the periodic sensing comprises sensing during a plurality of periodic sensing occasions; and
• after starting the periodic sensing:
∘ detect (508) a triggering event for an aperiodic sensing occasion; and
∘ adapt (510) the aperiodic sensing occasion,
the wireless communication device being **characterized in that** the aperiodic sensing occasion is adapted based on a periodicity of the periodic sensing occasions or based on a window size of one or more of the periodic sensing occasions or based on a starting time of a nearest one of the periodic sensing occasions to the aperiodic sensing occasion or based on an ending time of a nearest one of the periodic sensing occasions to the aperiodic sensing occasion.

11. The wireless communication device of claim 10 wherein adapting the aperiodic sensing occasion comprises:
(e) adapting a window size of the aperiodic sensing occasion, or
(f) adapting a starting time of the aperiodic sensing occasion, or
(g) adapting an ending time of the aperiodic sensing occasion, or
(h) a combination of any two or more of (a)-(c).

12. The wireless communication device of claim 10 wherein adapting the aperiodic sensing occasion comprises:
(e) adapting a window size of the aperiodic sensing occasion, or
(f) adapting a starting time of the aperiodic sensing occasion, or
(g) adapting an ending time of the aperiodic sensing occasion, or
(h) a combination of any two or more of (a)-(c),
such that a sum of the window size of the aperiodic sensing occasion and a window size of the one or more of the plurality of periodic sensing occasions is less than a threshold.

13. The wireless communication device of claim 10 wherein adapting the aperiodic sensing occasion comprises:
(e) adapting a window size of the aperiodic sensing occasion, or
(f) adapting a starting time of the aperiodic sensing occasion, or
(g) adapting an ending time of the aperiodic sensing occasion, or
(h) a combination of any two or more of (a)-(c),
such that a sum of a window size of the aperiodic sensing occasion, a window size of an additional aperiodic sensing occasion that is associated with the aperiodic sensing occasion for re-evaluation or re-selection of resources, and a window size of the one or more of the plurality of periodic sensing occasions is less than a threshold.

14. The wireless communication device of any of claims 10-13 further configured to:
perform sensing during the aperiodic sensing occasion;
select one or more resources for a sidelink transmission based on sensing information obtained as a result of the sensing during the aperiodic sensing occasion; and
transmit the sidelink transmission on the one or more selected resources.

15. The wireless communication device of any of claims 10-14, wherein adapting the aperiodic sensing occasion comprises:
adapting the aperiodic sensing occasion such that an ending time of the aperiodic sensing occasion is aligned with a starting time of a next periodic sensing occasion; or
adapting the aperiodic sensing occasion such that an ending time of the aperiodic sensing occasion is aligned with an ending time of a next periodic sensing occasion; or
adapting the aperiodic sensing occasion to extend an ending time of the aperiodic sensing occasion such that the aperiodic sensing occasion overlaps at least a portion of a next periodic sensing occasion; or
adapting the aperiodic sensing occasion such that a starting time of the aperiodic sensing occasion is aligned with an ending time of a preceding periodic sensing occasion; or
adapting the aperiodic sensing occasion such that a starting time of the aperiodic sensing occasion is aligned with a starting time of a preceding periodic sensing occasion.

## Patentansprüche

1. Verfahren, das durch eine drahtlose Kommunikationsvorrichtung (308) durchgeführt wird, wobei das Verfahren Folgendes umfasst:
• Starten (506) einer periodischen Erfassung, wobei die periodische Erfassung eine Erfassung während einer Vielzahl von periodischen Erfassungsgelegenheiten umfasst; und
• nach dem Starten der periodischen Erfassung:
∘ Detektieren (508) eines Auslöseereignisses für eine aperiodische Erfassungsgelegenheit; und
∘ Anpassen (510) der aperiodischen Erfassungsgelegenheit,
wobei das Verfahren **dadurch gekennzeichnet ist, dass** die aperiodische Erfassungsgelegenheit basierend auf einer Periodizität der periodischen Erfassungsgelegenheiten oder basierend auf einer Fenstergröße einer oder mehrerer der periodischen Erfassungsgelegenheiten oder basierend auf einer Startzeit einer nächstgelegenen der periodischen Erfassungsgelegenheiten an die aperiodische Erfassungsgelegenheit oder basierend auf einer Endzeit einer nächstgelegenen der periodischen Erfassungsgelegenheiten an die aperiodische Erfassungsgelegenheit angepasst wird.

2. Verfahren nach Anspruch 1, wobei das Anpassen der aperiodischen Erfassungsgelegenheit Folgendes umfasst:
(a) Anpassen einer Fenstergröße der aperiodischen Erfassungsgelegenheit oder
(b) Anpassen einer Startzeit der aperiodischen Erfassungsgelegenheit oder
(c) Anpassen einer Endzeit der aperiodischen Erfassungsgelegenheit oder
(d) eine Kombination aus beliebigen zwei oder mehr von (a)-(c).

3. Verfahren nach Anspruch 1, wobei das Anpassen der aperiodischen Erfassungsgelegenheit Folgendes umfasst:
(a) Anpassen einer Fenstergröße der aperiodischen Erfassungsgelegenheit oder
(b) Anpassen einer Startzeit der aperiodischen Erfassungsgelegenheit oder
(c) Anpassen einer Endzeit der aperiodischen Erfassungsgelegenheit oder
(d) eine Kombination aus beliebigen zwei oder mehr von (a)-(c),
sodass eine Summe der Fenstergröße der aperiodischen Erfassungsgelegenheit und einer Fenstergröße der einen oder der mehreren der Vielzahl von periodischen Erfassungsgelegenheiten geringer als ein Schwellenwert ist.

4. Verfahren nach Anspruch 1, wobei das Anpassen der aperiodischen Erfassungsgelegenheit Folgendes umfasst:
(a) Anpassen einer Fenstergröße der aperiodischen Erfassungsgelegenheit oder
(b) Anpassen einer Startzeit der aperiodischen Erfassungsgelegenheit oder
(c) Anpassen einer Endzeit der aperiodischen Erfassungsgelegenheit oder
(d) eine Kombination aus beliebigen zwei oder mehr von (a)-(c),
sodass eine Summe einer Fenstergröße der aperiodischen Erfassungsgelegenheit, einer Fenstergröße einer zusätzlichen aperiodischen Erfassungsgelegenheit, die der aperiodischen Erfassungsgelegenheit zur Neubewertung oder Neuauswahl von Ressourcen zugeordnet ist, und einer Fenstergröße der einen oder der mehreren der Vielzahl von periodischen Erfassungsgelegenheiten geringer als ein Schwellenwert ist.

5. Verfahren nach einem der vorhergehenden Ansprüche, wobei die eine oder die mehreren der Vielzahl von periodischen Erfassungsgelegenheiten aus einer oder mehreren der Vielzahl von periodischen Erfassungsgelegenheiten bestehen, die während eines definierten oder konfigurierten Zeitintervalls vor der aperiodischen Erfassungsgelegenheit auftreten.

6. Verfahren nach einem der vorhergehenden Ansprüche, ferner umfassend:
Durchführen (512) einer Erfassung während der aperiodischen Erfassungsgelegenheit;
Auswählen (514) einer oder mehrerer Ressourcen für eine Sidelink-Übertragung basierend auf Erfassungsinformationen, die in Folge der Erfassung während der aperiodischen Erfassungsgelegenheit erlangt werden; und
Übertragen (516) der Sidelink-Übertragung auf der einen oder den mehreren ausgewählten Ressourcen.

7. Verfahren nach Anspruch 6, wobei das Auswählen der einen oder der mehreren Ressourcen ferner auf Erfassungsinformationen basiert, die in Folge einer Erfassung während mindestens einer der Vielzahl von periodischen Erfassungsgelegenheiten erlangt werden.

8. Verfahren nach Anspruch 6 oder 7, wobei das Auswählen der einen oder der mehreren Ressourcen Auswählen der einen oder der mehreren Ressourcen aus einem Satz von Ressourcen umfasst, der eine oder mehrere Ressourcen umfasst, welche in einer oder mehreren bevorstehenden periodischen Erfassungsgelegenheiten umfasst sind.

9. Verfahren nach einem der vorhergehenden Ansprüche, wobei das Anpassen der aperiodischen Erfassungsgelegenheit Folgendes umfasst:
Anpassen der aperiodischen Erfassungsgelegenheit derart, dass eine Endzeit der aperiodischen Erfassungsgelegenheit mit einer Startzeit einer nächsten periodischen Erfassungsgelegenheit ausgerichtet ist; oder
Anpassen der aperiodischen Erfassungsgelegenheit derart, dass eine Endzeit der aperiodischen Erfassungsgelegenheit mit einer Endzeit einer nächsten periodischen Erfassungsgelegenheit ausgerichtet ist; oder
Anpassen der aperiodischen Erfassungsgelegenheit, um eine Endzeit der aperiodischen Erfassungsgelegenheit derart zu verlängern, dass die aperiodische Erfassungsgelegenheit mindestens einen Abschnitt einer nächsten periodischen Erfassungsgelegenheit überlappt; oder
Anpassen der aperiodischen Erfassungsgelegenheit derart, dass eine Startzeit der aperiodischen Erfassungsgelegenheit mit einer Endzeit einer vorherigen periodischen Erfassungsgelegenheit ausgerichtet ist; oder
Anpassen der aperiodischen Erfassungsgelegenheit derart, dass eine Startzeit der aperiodischen Erfassungsgelegenheit mit einer Startzeit einer vorherigen periodischen Erfassungsgelegenheit ausgerichtet ist.

10. Drahtlose Kommunikationsvorrichtung (308), die zu Folgendem angepasst ist:
• Starten (506) einer periodischen Erfassung, wobei die periodische Erfassung eine Erfassung während einer Vielzahl von periodischen Erfassungsgelegenheiten umfasst; und
• nach dem Starten der periodischen Erfassung:
∘ Detektieren (508) eines Auslöseereignisses für eine aperiodische Erfassungsgelegenheit; und
∘ Anpassen (510) der aperiodischen Erfassungsgelegenheit,
wobei die drahtlose Kommunikationsvorrichtung **dadurch gekennzeichnet ist, dass** die aperiodische Erfassungsgelegenheit basierend auf einer Periodizität der periodischen Erfassungsgelegenheiten oder basierend auf einer Fenstergröße einer oder mehrerer der periodischen Erfassungsgelegenheiten oder basierend auf einer Startzeit einer nächstgelegenen der periodischen Erfassungsgelegenheiten an die aperiodische Erfassungsgelegenheit oder basierend auf einer Endzeit einer nächstgelegenen der periodischen Erfassungsgelegenheiten an die aperiodische Erfassungsgelegenheit angepasst wird.

11. Drahtlose Kommunikationsvorrichtung nach Anspruch 10, wobei das Anpassen der aperiodischen Erfassungsgelegenheit Folgendes umfasst:
(e) Anpassen einer Fenstergröße der aperiodischen Erfassungsgelegenheit oder
(f) Anpassen einer Startzeit der aperiodischen Erfassungsgelegenheit oder
(g) Anpassen einer Endzeit der aperiodischen Erfassungsgelegenheit oder
(h) eine Kombination aus beliebigen zwei oder mehr von (a)-(c).

12. Drahtlose Kommunikationsvorrichtung nach Anspruch 10, wobei das Anpassen der aperiodischen Erfassungsgelegenheit Folgendes umfasst:
(e) Anpassen einer Fenstergröße der aperiodischen Erfassungsgelegenheit oder
(f) Anpassen einer Startzeit der aperiodischen Erfassungsgelegenheit oder
(g) Anpassen einer Endzeit der aperiodischen Erfassungsgelegenheit oder
(h) eine Kombination aus beliebigen zwei oder mehr von (a)-(c),
sodass eine Summe der Fenstergröße der aperiodischen Erfassungsgelegenheit und einer Fenstergröße der einen oder der mehreren der Vielzahl von periodischen Erfassungsgelegenheiten geringer als ein Schwellenwert ist.

13. Drahtlose Kommunikationsvorrichtung nach Anspruch 10, wobei das Anpassen der aperiodischen Erfassungsgelegenheit Folgendes umfasst:
(e) Anpassen einer Fenstergröße der aperiodischen Erfassungsgelegenheit oder
(f) Anpassen einer Startzeit der aperiodischen Erfassungsgelegenheit oder
(g) Anpassen einer Endzeit der aperiodischen Erfassungsgelegenheit oder
(h) eine Kombination aus beliebigen zwei oder mehr von (a)-(c),
sodass eine Summe einer Fenstergröße der aperiodischen Erfassungsgelegenheit, einer Fenstergröße einer zusätzlichen aperiodischen Erfassungsgelegenheit, die der aperiodischen Erfassungsgelegenheit zur Neubewertung oder Neuauswahl von Ressourcen zugeordnet ist, und einer Fenstergröße der einen oder der mehreren der Vielzahl von periodischen Erfassungsgelegenheiten geringer als ein Schwellenwert ist.

14. Drahtlose Kommunikationsvorrichtung nach einem der Ansprüche 10-13, die ferner zu Folgendem konfiguriert ist:
Durchführen einer Erfassung während der aperiodischen Erfassungsgelegenheit;
Auswählen einer oder mehrerer Ressourcen für eine Sidelink-Übertragung basierend auf Erfassungsinformationen, die in Folge der Erfassung während der aperiodischen Erfassungsgelegenheit erlangt werden; und
Übertragen der Sidelink-Übertragung auf der einen oder den mehreren ausgewählten Ressourcen.

15. Drahtlose Kommunikationsvorrichtung nach einem der Ansprüche 10-14, wobei das Anpassen der aperiodischen Erfassungsgelegenheit Folgendes umfasst:
Anpassen der aperiodischen Erfassungsgelegenheit derart, dass eine Endzeit der aperiodischen Erfassungsgelegenheit mit einer Startzeit einer nächsten periodischen Erfassungsgelegenheit ausgerichtet ist; oder
Anpassen der aperiodischen Erfassungsgelegenheit derart, dass eine Endzeit der aperiodischen Erfassungsgelegenheit mit einer Endzeit einer nächsten periodischen Erfassungsgelegenheit ausgerichtet ist; oder
Anpassen der aperiodischen Erfassungsgelegenheit, um eine Endzeit der aperiodischen Erfassungsgelegenheit derart zu verlängern, dass die aperiodische Erfassungsgelegenheit mindestens einen Abschnitt einer nächsten periodischen Erfassungsgelegenheit überlappt; oder
Anpassen der aperiodischen Erfassungsgelegenheit derart, dass eine Startzeit der aperiodischen Erfassungsgelegenheit mit einer Endzeit einer vorherigen periodischen Erfassungsgelegenheit ausgerichtet ist; oder
Anpassen der aperiodischen Erfassungsgelegenheit derart, dass eine Startzeit der aperiodischen Erfassungsgelegenheit mit einer Startzeit einer vorherigen periodischen Erfassungsgelegenheit ausgerichtet ist.

## Revendications

1. Procédé réalisé au moyen d'un dispositif de communication sans fil (308), le procédé comprenant :
• le démarrage (506) d'une détection périodique, dans lequel la détection périodique comprend la détection pendant une pluralité d'occasions de détection périodique ; et
• après le démarrage de la détection périodique :
∘ la détection (508) d'un événement pour induire une occasion de détection apériodique ; et
∘ l'adaptation (510) de l'occasion de détection apériodique,
le procédé étant **caractérisé en ce que** l'occasion de détection apériodique est adaptée en fonction d'une périodicité des occasions de détection périodique ou en fonction d'une taille de fenêtre d'une ou plusieurs des occasions de détection périodique ou en fonction d'un instant de début de l'occasion de détection périodique la plus proche de l'occasion de détection apériodique ou en fonction d'un instant de fin de l'occasion de détection périodique la plus proche de l'occasion de détection apériodique.

2. Procédé selon la revendication 1, dans lequel l'adaptation de l'occasion de détection apériodique comprend :
(a) l'adaptation d'une taille de fenêtre de l'occasion de détection apériodique, ou
(b) l'adaptation d'un instant de début de l'occasion de détection apériodique, ou
(c) l'adaptation d'un instant de fin de l'occasion de détection apériodique, ou
(d) une combinaison de deux quelconques ou plus de (a) à (c).

3. Procédé selon la revendication 1, dans lequel l'adaptation de l'occasion de détection apériodique comprend :
(a) l'adaptation d'une taille de fenêtre de l'occasion de détection apériodique, ou
(b) l'adaptation d'un instant de début de l'occasion de détection apériodique, ou
(c) l'adaptation d'un instant de fin de l'occasion de détection apériodique, ou
(d) une combinaison de deux quelconques ou plus de (a) à (c).
de sorte que la somme de la taille de fenêtre de l'occasion de détection apériodique et d'une taille de fenêtre des une ou plusieurs de la pluralité d'occasions de détection périodique est inférieure à un seuil.

4. Procédé selon la revendication 1, dans lequel l'adaptation de l'occasion de détection apériodique comprend :
(a) l'adaptation d'une taille de fenêtre de l'occasion de détection apériodique, ou
(b) l'adaptation d'un instant de début de l'occasion de détection apériodique, ou
(c) l'adaptation d'un instant de fin de l'occasion de détection apériodique, ou
(d) une combinaison de deux quelconques ou plus de (a) à (c).
de sorte que la somme d'une taille de fenêtre de l'occasion de détection apériodique, d'une taille de fenêtre d'une occasion de détection apériodique supplémentaire qui est associée à l'occasion de détection apériodique pour une réévaluation ou une resélection de ressources, et d'une taille de fenêtre des une ou plusieurs de la pluralité d'occasions de détection périodique est inférieure à un seuil.

5. Procédé selon l'une quelconque des revendications précédentes, dans lequel les une ou plusieurs de la pluralité d'occasions de détection périodique se composent d'une ou plusieurs de la pluralité d'occasions de détection périodique qui se produisent pendant un intervalle de temps défini ou configuré avant l'occasion de détection apériodique.

6. Procédé selon l'une quelconque des revendications précédentes, comprenant en outre :
la réalisation (512) d'une détection pendant l'occasion de détection apériodique ;
la sélection (514) d'une ou plusieurs ressources pour une transmission en liaison latérale en fonction d'informations de détection obtenues en résultat de la détection pendant l'occasion de détection apériodique ; et
l'émission (516) de la transmission en liaison latérale sur les une ou plusieurs ressources sélectionnées.

7. Procédé selon la revendication 6, dans lequel la sélection des une ou plusieurs ressources est en outre déterminée en fonction d'informations de détection obtenues en résultat d'une détection pendant au moins une de la pluralité d'occasions de détection périodique.

8. Procédé selon la revendication 6 ou 7, dans lequel la sélection des une ou plusieurs ressources comprend la sélection des une ou plusieurs ressources à partir d'un ensemble de ressources qui comprend une ou plusieurs ressources qui sont comprises dans une ou plusieurs occasions de détection périodique à venir.

9. Procédé selon l'une quelconque des revendications précédentes, dans lequel l'adaptation de l'occasion de détection apériodique comprend :
l'adaptation de l'occasion de détection apériodique de sorte qu'un instant de fin de l'occasion de détection apériodique est aligné sur un instant de début d'une occasion de détection périodique suivante ; ou
l'adaptation de l'occasion de détection apériodique de sorte qu'un instant de fin de l'occasion de détection apériodique est aligné sur un instant de fin d'une occasion de détection périodique suivante ; ou
l'adaptation de l'occasion de détection apériodique pour prolonger un instant de fin de l'occasion de détection apériodique de sorte que l'occasion de détection apériodique chevauche au moins une partie d'une occasion de détection périodique suivante ; ou
l'adaptation de l'occasion de détection apériodique de sorte qu'un instant de début de l'occasion de détection apériodique est aligné sur un instant de fin d'une occasion de détection périodique précédente ; ou
l'adaptation de l'occasion de détection apériodique de sorte qu'un instant de début de l'occasion de détection apériodique est aligné sur un instant de début d'une occasion de détection périodique précédente.

10. Dispositif de communication sans fil (308) adapté pour :
• démarrer (506) une détection périodique, dans lequel la détection périodique comprend la détection pendant une pluralité d'occasions de détection périodique ; et
• après le démarrage de la détection périodique :
∘ détecter (508) un événement pour induire une occasion de détection apériodique ; et
∘ adapter (510) l'occasion de détection apériodique,
le dispositif de communication sans fil étant **caractérisé en ce que** l'occasion de détection apériodique est adaptée en fonction d'une périodicité des occasions de détection périodique ou en fonction d'une taille de fenêtre d'une ou plusieurs des occasions de détection périodique ou en fonction d'un instant de début de l'occasion de détection périodique la plus proche de l'occasion de détection apériodique ou en fonction d'un instant de fin de l'occasion de détection périodique la plus proche de l'occasion de détection apériodique.

11. Dispositif de communication sans fil selon la revendication 10, dans lequel l'adaptation de l'occasion de détection apériodique comprend :
(e) l'adaptation d'une taille de fenêtre de l'occasion de détection apériodique, ou
(f) l'adaptation d'un instant de début de l'occasion de détection apériodique, ou
(g) l'adaptation d'un instant de fin de l'occasion de détection apériodique, ou
(h) une combinaison de deux quelconques ou plus de (a) à (c).

12. Dispositif de communication sans fil selon la revendication 10, dans lequel l'adaptation de l'occasion de détection apériodique comprend :
(e) l'adaptation d'une taille de fenêtre de l'occasion de détection apériodique, ou
(f) l'adaptation d'un instant de début de l'occasion de détection apériodique, ou
(g) l'adaptation d'un instant de fin de l'occasion de détection apériodique, ou
(h) une combinaison de deux quelconques ou plus de (a) à (c).
de sorte que la somme de la taille de fenêtre de l'occasion de détection apériodique et d'une taille de fenêtre des une ou plusieurs de la pluralité d'occasions de détection périodique est inférieure à un seuil.

13. Dispositif de communication sans fil selon la revendication 10, dans lequel l'adaptation de l'occasion de détection apériodique comprend :
(e) l'adaptation d'une taille de fenêtre de l'occasion de détection apériodique, ou
(f) l'adaptation d'un instant de début de l'occasion de détection apériodique, ou
(g) l'adaptation d'un instant de fin de l'occasion de détection apériodique, ou
(h) une combinaison de deux quelconques ou plus de (a) à (c).
de sorte que la somme d'une taille de fenêtre de l'occasion de détection apériodique, d'une taille de fenêtre d'une occasion de détection apériodique supplémentaire qui est associée à l'occasion de détection apériodique pour une réévaluation ou une resélection de ressources, et d'une taille de fenêtre des une ou plusieurs de la pluralité d'occasions de détection périodique est inférieure à un seuil.

14. Dispositif de communication sans fil selon l'une quelconque des revendications 10 à 13, configuré en outre pour :
réaliser une détection pendant l'occasion de détection apériodique ;
sélectionner une ou plusieurs ressources pour une transmission en liaison latérale en fonction d'informations de détection obtenues en résultat de la détection pendant l'occasion de détection apériodique ; et
émettre la transmission en liaison latérale sur les une ou plusieurs ressources sélectionnées.

15. Dispositif de communication sans fil selon l'une quelconque des revendications 10 à 14, dans lequel l'adaptation de l'occasion de détection apériodique comprend :
l'adaptation de l'occasion de détection apériodique de sorte qu'un instant de fin de l'occasion de détection apériodique est aligné sur un instant de début d'une occasion de détection périodique suivante ; ou
l'adaptation de l'occasion de détection apériodique de sorte qu'un instant de fin de l'occasion de détection apériodique est aligné sur un instant de fin d'une occasion de détection périodique suivante ; ou
l'adaptation de l'occasion de détection apériodique pour prolonger un instant de fin de l'occasion de détection apériodique de sorte que l'occasion de détection apériodique chevauche au moins une partie d'une occasion de détection périodique suivante ; ou
l'adaptation de l'occasion de détection apériodique de sorte qu'un instant de début de l'occasion de détection apériodique est aligné sur un instant de fin d'une occasion de détection périodique précédente ; ou
l'adaptation de l'occasion de détection apériodique de sorte qu'un instant de début de l'occasion de détection apériodique est aligné sur un instant de début d'une occasion de détection périodique précédente.
